# EUROPÄISCHE PATENTSCHRIFT

(11) **EP 1 824 633 B1**
(45) Veröffentlichungstag und Bekanntmachung des Hinweises auf die Patenterteilung: **11.08.2010**
(21) Anmeldenummer: 05817367.5
(22) Anmeldetag: 07.12.2005
(51) Int. Cl.: B23K 20/12, F16B 37/06, B21C 37/29, B23K 33/00

(54) **REIBSCHWEISSVERBINDUNG ZWISCHEN EINEM BLECHTEIL UND EINEM ROTATIONSK\RPER**
FRICTION-WELDED CONNECTION BETWEEN A SHEET METAL ELEMENT AND A ROTATION BODY
LIAISON DE SOUDAGE PAR FRICTION ENTRE UNE PIECE EN TOLE ET UN CORPS ROTATIF

(30) Priorität: 10.12.2004 DE 102004059625
(43) Veröffentlichungstag der Anmeldung: 29.08.2007
(73) Patentinhaber: EJOT GmbH & Co. KG, 57334 Bad Laasphe (DE)
(72) Erfinder: CHRIST, Eberhard, 99897 Tambach-Dietharz (DE)
(74) Vertreter: Bardehle, Heinz
(86) Internationale Anmeldenummer: PCT/EP2005/013108
(87) Internationale Veröffentlichungsnummer: WO 2006/061203

(56) Entgegenhaltungen:
- EP-A- 0 150 518
- EP-A- 0 337 813
- EP-A- 1 593 452
- WO-A-2006/008122
- DE-A1- 10 125 117
- US-A- 6 067 839
- US-A1- 2003 012 619
- PATENT ABSTRACTS OF JAPAN Bd. 2003, Nr. 11, 5. November 2003 (2003-11-05) & JP 2003 205373 A (TOSHIBA CORP), 22. Juli 2003 (2003-07-22)
- SCHOBER D.: "Reibschweissen von Metallen" 1990, DVS-VERLAG , DÜSSELDORF , XP002372882 ISBN: 3-87155-124-4 in der Anmeldung erwähnt Seite 67

## Beschreibung

Die Erfindung bezieht sich auf ein Blechteil und in dieses eingesetzter Rotationskörper, welche Teile mit einer Reibschweißverbindung verschweißt sind, wobei das Blechteil mit einer herausragenden, kreisrunden Ringwand als Druckfläche versehen ist, an die der mit einem Aufweitungskonus versehene Rotationskörper mit einer Gegendruckfläche andrückbar ist und mindestens eine Druckfläche konisch verläuft, wobei das Einsetzen des Rotationskörpers die Ringwand mit zunehmendem Druck belastet und zwischen Rotationskörper und Ringwand eine durch Drehung des Rotationskörpers gebildete Reibschweißverbindung besteht und wobei die Ringwand von einem Durchzug gebildet ist und der Durchzug in Einsetzrichtung des Rotationskörpers aus dem Blechteil heraus ragt. Eine solche Verbindung, jedoch mit zwei Blechteilen, ist aus US 2003/012619 A1 bekannt.

Eine derartige Reibschweißverbindung ist in dem Buch "Reibschweißen von Metallen" von Neumann Schober, erschienen 1991 im Verlag Technik Berlin, auf Seite 67 dargestellt. Dabei handelt es sich um eine Reibschweißverbindung zwischen einem gelochten Blechteil und einem gedrehten Bolzen, wobei das Loch in dem Blechteil konisch oder zylindrisch sein kann und der Bolzen ein in das Loch im Blechteil ragendes Ende aufweist, das ebenfalls konisch ausgebildet ist. Dabei können sowohl das betreffende Ende des Bolzens als auch das Loch im Blechteil konisch gestaltet sein, wobei der Konuswinkel bezüglich der beiden Teile gleich ist. Als Nachteil dieser Gestaltung wird darauf hingewiesen, dass die Bindefläche, die der Dicke des Blechteils entspricht, relativ klein ist.

Darüber hinaus zeigen die DE 199 27 369 A1 und die US-PS 4,850,772 jeweils Reibschweißverbindungen zwischen einem glatten, ungelochten Blechteil und einem Bolzen, wobei die Reibschweißverbindung die Stirnseite des Bolzens einschließt, die gegebenenfalls gegenüber dem Durchmesser des Bolzens radial erweitert sein kann.

Es ist weiterhin aus der DE 10012 782 A1 eine Reibschweißverbindung von zwei Kunststoffteilen bekannt, von denen das eine Kunststoffteil eine Art Bolzen bildet, der gegen ein Bauteil gedrückt wird, das zur Aufnahme des bolzenartigen Befestigungselementes mit einer relativ dicken Ringwand versehen ist. In dem von der Ringwand eingeschlossenen Raum passt das bolzenartige Befestigungselement hinein, wobei die obere Innenkante der Ringwand abgeschrägt ist und einer entsprechenden Schräge an dem Bolzen gegenübersteht, so dass sich in diesem Bereich eine Reibschweißverbindung herstellen lässt.

Der Erfindung liegt die Aufgabe zugrunde, durch den Reibschweißvorgang auch die Bildung eines kreisrunden Durchzugs zu ermöglichen, so dass die Bildung des Durchzugs keines besonderen vorhergehenden Fabrikationsaufwandes bedarf.

Erfindungsgemäß geschieht dies dadurch, dass zur Bildung des Durchzugs der Rotationskörper mit einer Bohrspitze, an die sich der anschließende Aufweitungskonus anschließt, versehen ist und der so gebildete Durchzug mit der sich an den Durchzug anschließenden Reibfläche des Rotationskörpers die Reibschweißverbindung bildet.

Diese Reibschweißverbindung wird also dadurch hergestellt, dass zunächst von dem Rotationskörper mit Andrücken gegen das Blechteil ein Durchzug ausgeformt wird, der dann als Reibschweißfläche dem Rotationskörper gegenübersteht und durch Reibschweißen mit ihm später verbunden wird. Zweckmäßig kann man dem Rotationskörper noch eine im wesentlichen radial nach außen verlaufende ebene Stirnfläche geben, die gegebenenfalls in die Reibschweißverbindung zu deren Verbesserung einbezogen werden kann.

In den Figuren ist ein Ausführungsbeispiel der Erfindung dargestellt. Es zeigen:

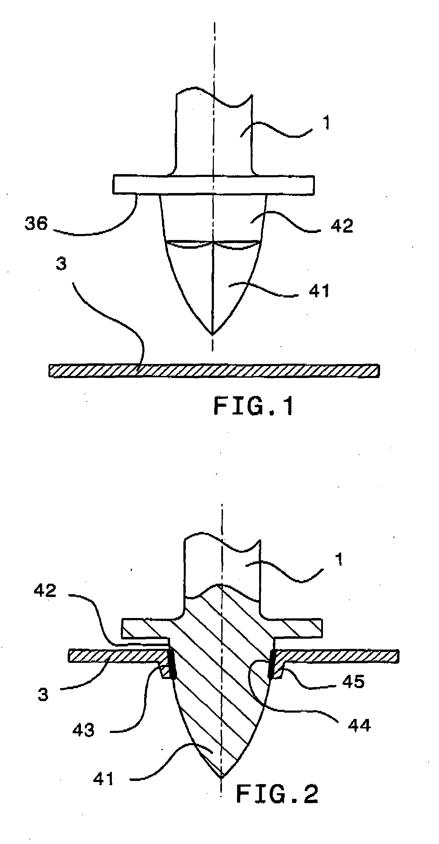

- Figuren 1 und 2: die Verwendung einer Bohrspitze mit anschließendem Aufweitungskonus zur Erzeugung eines Durchzuges in Einsetzrichtung des Rotationskörpers;

In den Figuren 1 und 2 ist die Bildung eines Durchzugs mit anschließender Reibschweißverbindung 44 dargestellt. Es handelt sich dabei um einen mit einer Bohrspitze 41 versehenen Rotationskörper 1, der außerdem einen Aufweitungskonus 42 besitzt. Mit der Bohrspitze 41 wird zunächst in das Blechteil 3 eine Bohrung gebohrt und schließlich mittels des Aufweitungskonus 42 auf den gewünschten Durchmesser aufgeweitet (siehe Figur 2), wobei automatisch die Ringwand 43 den Durchzug 45 des Blechteils 3 bildet, womit gewissermaßen zwei Fliegen mit einer Klappe geschlagen werden, nämlich einerseits die Erzeugung des erforderlichen Durchbruchs im Blechteil 3 bei gleichzeitiger Erstellung des Durchzugs 45 als Ringwand 43, an deren Innenseite sich dann die Reibschweißverbindung, dargestellt durch die Schwärzung 44, ergibt.

## Patentansprüche

1. Blechteil und in dieses eingesetzter Rotationskörper, welche Teile mit einer Reibschweißverbindung verschweißt sind, wobei das Blechteil (3) mit einer herausragenden, kreisrunden Ringwand (43) als Druckfläche versehen ist, an die der mit einem Aufweitungskonus (42) versehene Rotationskörper (1) mit einer Gegendruckfläche andrückbar ist und mindestens eine Druckfläche konisch verläuft, wobei das Einsetzen des Rotationskörpers (1) die Ringwand (43) mit zunehmendem Druck belastet und zwischen Rotationskörper (1) und Ringwand eine durch Drehung des Rotationskörpers (1) gebildete Reibschweißverbindung (44) besteht und wobei die Ringwand (43) von einem Durchzug 45 gebildet ist und der Durchzug (45) in Einsetzrichtung des Rotationskörpers (1) aus dem Blechteil (3) heraus ragt, **dadurch gekennzeichnet, dass** zur Bildung des Durchzugs (45) der Rotationskörper (1) mit einer Bohrspitze (41), an die sich der anschließende Aufweitungskonus (42) anschließt, versehen ist und der so gebildete Durchzug (45) mit der sich an den Durchzug (45) anschließenden Reibfläche des Rotationskörpers (1) die Reibschweißverbindung (44) bildet.

2. Reibschweißverbindung nach Anspruch 1, **dadurch gekennzeichnet, dass** der Konus des Rotationskörpers in eine im Wesentliche ebene Stirnfläche (36) radial nach außen übergeht.

## Claims

1. A sheet metal part and a rotation body which is inserted therein, said parts having been welded together by means of a friction-welded connection, wherein said sheet metal part (3) comprises a protruding circular annular wall (43) as a pressure surface onto which said rotation body (1) including an expansion cone (42) can be pressed with a counter-pressure surface and wherein at least one pressure surface extends in a conical manner, with the introduction of the rotation body (1) causing said annular wall (43) to be increasingly pressurized and with a friction-welded connection (44) existing between said rotation body (1) and said annular wall which was accomplished by rotating said rotation body (1), and wherein said annular wall (43) is formed by a through passage (45) that protrudes from said sheet metal part (3) in the direction in which said rotation body (1) was inserted therein **characterized in that** for forming said through passage (45) said rotation body (1) is provided with a drill bit (41) followed by the adjacent expansion cone (42), with the through passage (45) thus created and the friction surface of the rotation body (1) following said through passage (45) constituting said friction-welded connection (44).

2. The sheet metal part of claim 1 **characterized in that** the cone of said rotation body radially and outwardly merges into an essentially planar end face (36).

## Revendications

1. Pièce de tôle et corps rotatif inséré dans celle-ci, dont les pièces sont soudées par une liaison de soudage à friction, la pièce de tôle (3) étant pourvue d'une paroi annulaire (43) proéminente ronde en tant que surface de pression, sur laquelle le corps rotatif (1) pourvu d'un cône d'évasement (42) peut être pressé avec une surface de contre pression et au moins une surface de pression de forme conique, l'ajustement du corps rotatif (1) sollicitant la paroi annulaire (43) avec une pression croissante et existant entre le corps rotatif (1) et la paroi annulaire une liaison de soudage par friction (44) formée par la rotation du corps rotatif (1), et la paroi annulaire (43) étant formée par un collet (45) et le collet (45) faisant saillie dans la direction d'insertion du corps rotatif (1) en dehors de la pièce en tôle (3), **caractérisé en ce que** pour la formation du collet (45) le corps rotatif (1) est pourvu d'une pointe mèche (41) sur laquelle est raccordé le cône d'évasement de raccord (42), et le courant (45) formé de cette manière avec la surface de friction du corps rotatif (1) raccordée au courant forme la liaison de soudage par friction(44).

2. Liaison par soudage par friction selon revendication 1, **caractérisée en ce que** le cône du corps rotatif dépasse radialement vers l'extérieur essentiellement dans une face frontale plane (36).
